# EUROPEAN PATENT APPLICATION

(11) **EP 2 441 644 A2**
(43) Date of publication of application: **18.04.2012**
(21) Application number: 11185220.8
(22) Date of filing: 14.10.2011
(51) Int. Cl.: B62B 1/06, B62B 5/00

(54) **Furniture mover and a method for moving furniture**

(30) Priority: 14.10.2010 FI 20106064
(71) Applicant: Hartikainen, Jukka, 13300 Hämeenlinna (FI)
(72) Inventor: Hartikainen, Jukka, 13300 Hämeenlinna (FI)
(74) Representative: Helke, Kimmo Kalervo

(57) **Abstract**

The invention relates to a furniture mover, which is intended for moving a fitting (10) formed from fitting elements (11). The furniture mover is intended to be attached to a fitting element (11) without dismantling the fitting (10). The invention also relates to a method for moving fittings.

## Description

The present invention relates to a furniture mover, which is intended for moving a piece of furniture formed from fitting elements. The invention also relates to a method for moving furniture.

Particularly in shops, shop fittings are formed from fitting elements. In practice, the desired type of fitting is created by combining fitting elements. If necessary, the fitting can be altered by changing the fitting elements. After assembly, the fittings are filled with products on sale. As the size of shops increases, the size of fittings has also increased. Thus, even the term gondola shelving is used, which is often two-sided and can be up to tens of metres in length.

However, sometimes gondola shelving needs to be moved. The fittings are then emptied of products and the fittings dismantled. The fittings are next assembled in a new location and the products transferred to the fittings. This is extremely slow and demands a great deal of labour. In addition, the sale of the products is often interrupted, or at least hindered considerably. The more daring shops have used known transfer means, such as pallet jacks and fork-lift trucks, for moving, which has led to fittings being broken or even falling over.

The present invention is intended to create a new type of furniture mover, which can be used to move a fitting rapidly and safely. In addition, the invention is intended to create a new type of method, which is suitable for moving different types of shop fitting. The characteristic features of the arrangement according to the invention are stated in Claim 1. Correspondingly, the characteristic features of the method according to the invention are stated in Claim 12. The furniture mover according to the invention is arranged to be attached to a fitting element, without the fitting being dismantled. In other words, the furniture mover can be easily attached to a fitting, while the products are in place the whole time. Thus, the fitting need not be emptied of products, and the fitting elements scarcely need to be detached. Possible cover strips or plugs are detached if necessary, but the products can remain on the shelves. The furniture mover is ruggedly built and can be easily attached to a fitting even without tools.

In the following, the invention is described in greater detail with reference to the accompanying drawings depicting some embodiments of the invention, in which
- Figure 1a: shows a schematic top view of a fitting,
- Figure 1b: shows a schematic end view of the fitting,
- Figure 1c: shows the furniture mover according to the invention, attached to the fitting,
- Figure 1d: shows part of the fitting,
- Figure 2: shows an angled front view of the furniture mover according to the invention,
- Figure 3: shows an angled rear view of the furniture mover according to the invention,
- Figure 4a: shows a rear view of the furniture mover according to the invention,
- Figure 4b: shows a side view of the furniture mover according to the invention,
- Figure 4c: shows a front view of the furniture mover according to the invention,
- Figure 4d: shows a top view of the furniture mover according to the invention,
- Figure 4e: shows a bottom view of the furniture mover according to the invention,
- Figure 5: shows a partial enlargement of the furniture mover according to the invention,
- Figure 6a: shows a top view of a second embodiment of the furniture mover according to the invention,
- Figure 6b: shows a side view of a second embodiment of the furniture mover according to the invention,
- Figure 6c: shows an adapter of the furniture mover according to the invention, seen from three different directions,
- Figure 7a: shows one stage of the method according to the invention,
- Figure 7b: shows side and top views of the intermediate structure shown in Figure 7a, and
- Figure 8: shows a stage in the method according to the invention.

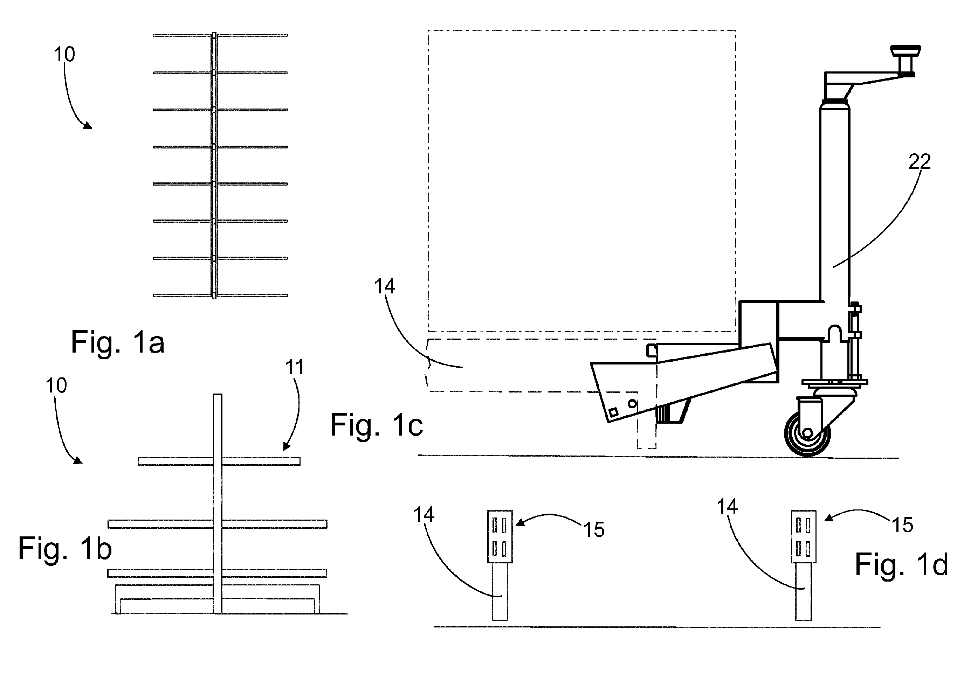

Figures 1a and 1b show schematically a fitting 10, more specifically gondola shelving. Generally, the fitting 10 is formed from fitting elements 11, which are detachably attached to each other. Thus, if required, the configuration of the fitting can be altered simply. In one known fitting, two shoe components are attached to one vertical tube and the parallel vertical tubes are connected by backing boards, thus forming a sturdy structure. Shelves or other fitting elements for placing products on the fitting are attached to the vertical tubes. Thus, the furniture mover is intended for moving a fitting 10 formed from fitting elements 11. According to the invention, the furniture mover is arranged to be attached to a fitting element 11, without dismantling the fitting 10. In other words, the furniture mover is attached to a fitting element without dismantling the fitting. Then, it is rapid and safe to move fittings. At the same time, products sold in shops, for example, can remain in place in fittings while the fittings are moved.

The furniture mover preferably includes quick-release attachment means 12 for attaching the furniture mover to a fitting element 11. The attaching and detaching of the furniture mover will then be rapid. In addition, the furniture mover will remain securely in place, so that the fitting can be pushed/pulled, without having to hold onto the furniture mover.

Attaching and detaching will usually succeed without tools. In addition to the quick-release attachment means, the furniture mover includes a support structure 13, which is arranged to be supported on the fitting element 11 from two different directions. Support in three directions will then be easily achieved, so that the attachment between the furniture mover and the fitting will be secure.

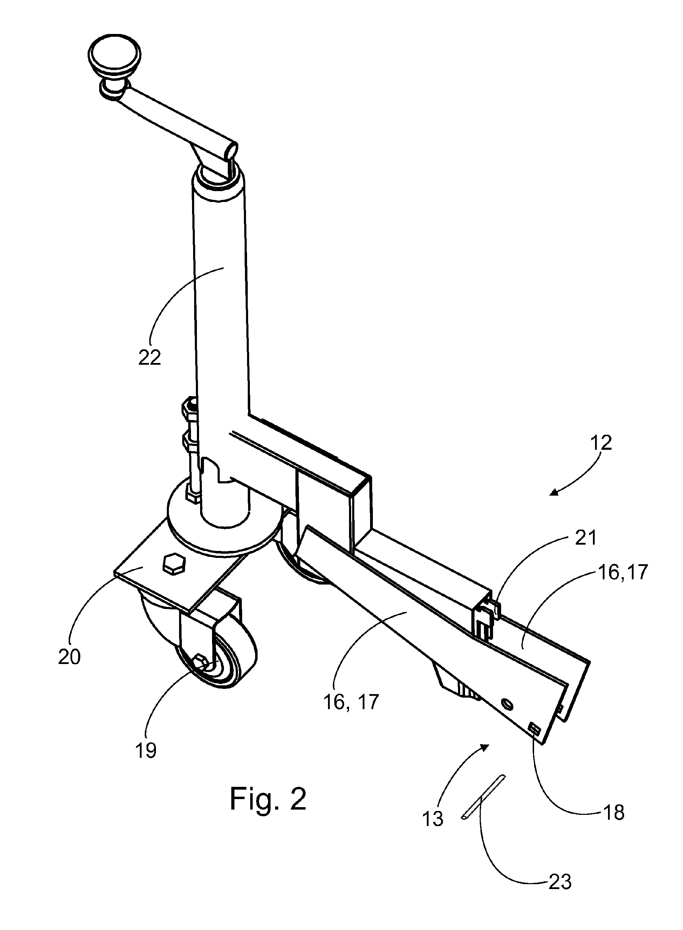

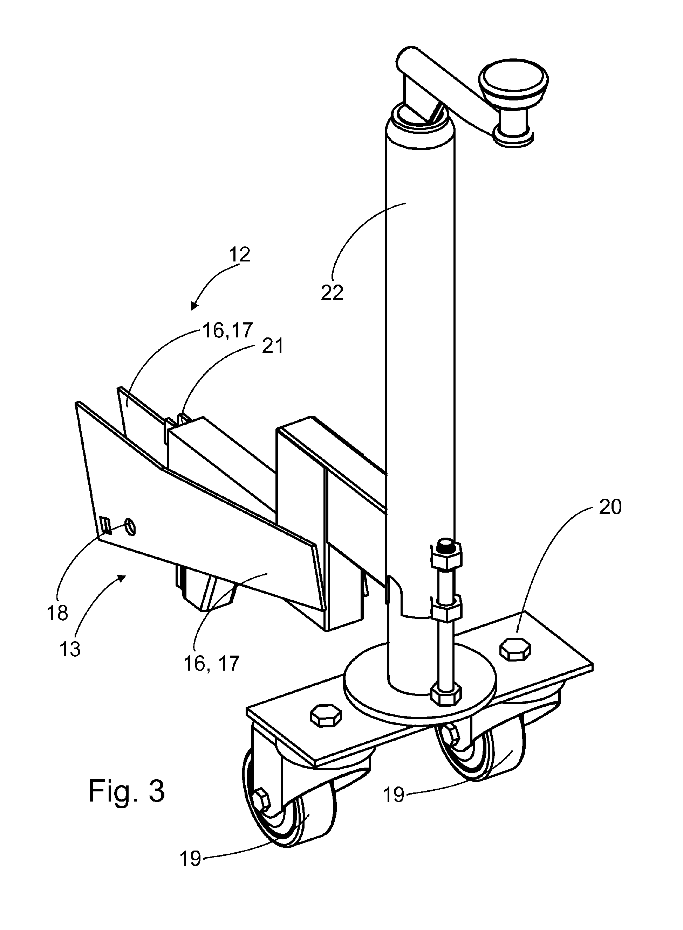

The first embodiment shown is arranged to be attached to the shoe component 14 (Figure 1c) belonging to the fitting 10. In this case, the quick-release attachment elements 12 are arranged according to the attachment arrangements 15 belonging to the shoe component 14. In addition, the support structure 13 is formed of two supports 16, which are arranged at a distance of the width of the shoe component 14 from each other. The supports 16 according to Figures 2 and 3 are rigid plate components 17, between which the shoe component 14 fits. Between the supports 16, there is preferably also a detachable safety catch 23, for locking the furniture mover onto the fitting element. This prevents the furniture mover from detaching unintentionally. In the embodiment shown, the safety catch 23 is a pin, which is fed through holes 18 in the supports 16. Thanks to the two holes shown, a single type of furniture mover is suitable for shoe components of different widths. Other kinds of safety catch are also possible. The furniture mover can also include an adapter piece, for attachment to different kinds of fitting.

The furniture mover is used, for example, for moving shop fittings. The term shop fitting refers, for example, for shelving fittings generally used in shops. Of course, similar fittings can also be used in industrial production premises. The furniture mover is suitable for moving most types of shelving fittings widely used in shops, such as, for example, moving the fittings made by ITAB Shop Concept Finland Oy and Pikval Oy.

Practical tests have shown that the load-bearing capacity of the furniture mover is so great that shelving gondolas more than ten-metres long, along with all the products on sale, can be moved from one place to another, by using several furniture movers. Thus, a shelving gondola need not be emptied and filled in connection with the moving process, never mind having to dismantle the fitting. This being so, considerable savings in time are achieved when moving shelving gondolas and other fittings.

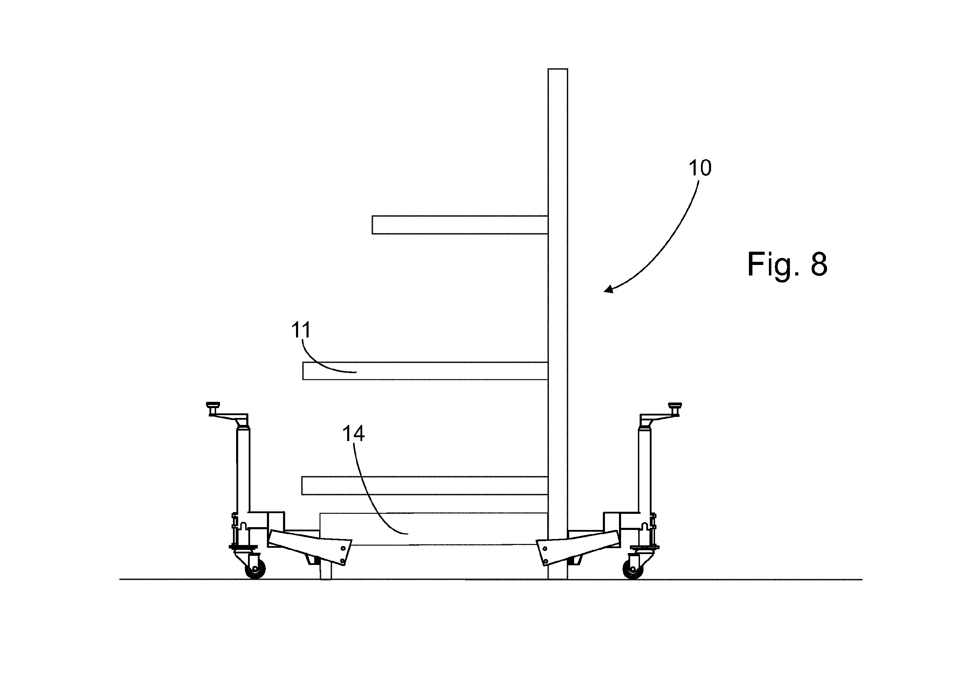

The furniture mover is installed in shop fittings at 90-centimetre intervals on the shoes on both sides, one furniture mover to each shoe component. There are also fittings with, for example, a 50 or 120-centimetre division. When moving an L-section fitting, the furniture mover is attached to each end of the same shoe component (Figure 8). With the aid of the jack in the furniture mover, the shelving gondola is raised to a height of about one centimetre off the floor, when the entire mass of the shelving gondola will be carried by the wheels in the furniture mover. In each furniture mover, there are two rotating wheels 19, which are attached to a rotating base 20. The rotating wheels and the rotating base permit shelving gondolas to be moved in any direction whatever. The dimensioning and number of the wheels can vary in different embodiments, but the use of two wheels gives sturdiness to the furniture mover.

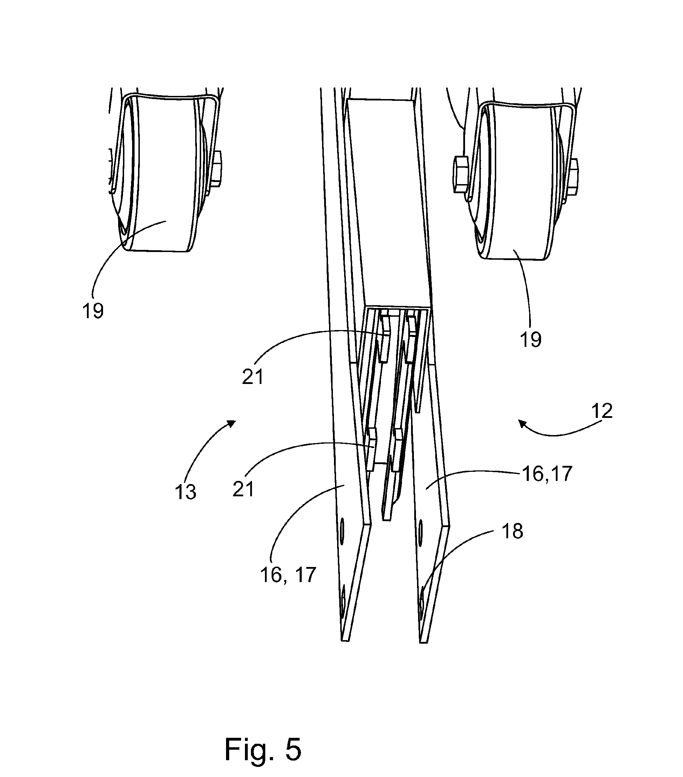

In the first embodiment, the furniture mover is attached to the shoe component with the aid of hooks 21 and the aforementioned safety catch. The quick-release means are formed mainly of hooks. The hooks fit directly into fittings made by ITAB Shop Concept Finland Oy and Pikval Oy. The surprising practicality and ease of use of the furniture mover are achieved by the following means. First of all, using a hook the furniture mover can be attached to the shoe component of a fitting, without dismantling the fitting. In practice, in the shoe components of all fittings there are from two to six rectangular openings about 2-centimetres high and about 5-millimetres wide, in two rows (Figure 1c). The hooks of the furniture mover fit perfectly into these openings. There are four hooks in the furniture mover, the lower of which are six-millimetres shorter than the upper. A shape of this kind allows the hooks to fit into the shoe component of the fitting (Figure 5).

The safety catch too is important. The safety catch, such as a bolt attachment, allows the rear part of the furniture mover to be locked onto the fitting in such a way that the furniture mover cannot move away laterally or vertically. There are holes in the furniture mover for the bolts on both sides of the sides of the metal plates, which are about three-millimetres thick. There are holes on both sides for bolts with a diameter of ten millimetres. The nearer hole fits Pikval Oy's fittings while the farther hole fits the most common fittings by ITAB Shop Concept Finland Oy (Figure 1c).

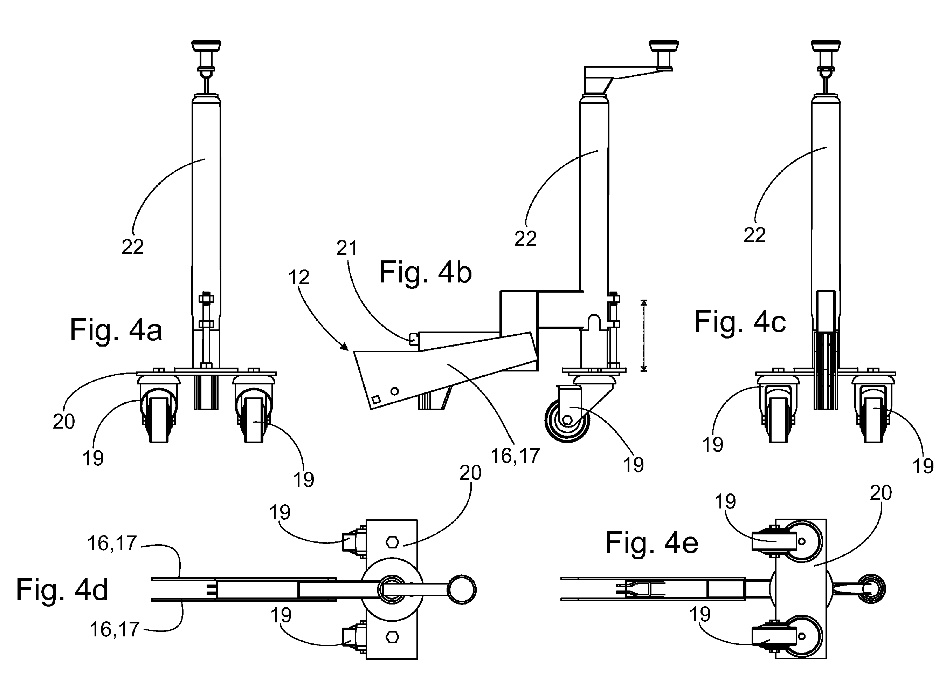

In the embodiment shown, both wheels rotate through 360 degrees. In addition, the wheels are attached to a rotating base. The wheels are attached to a ten-millimetre thick plate iron, which is welded to the jack 22. Thus, the base of the jack itself rotates, which permits the entire attachment of the wheels along with the wheels to rotate. In normal use, the base does not rotate, but the wheels can rotate. The plate iron, to which the wheels are attached, can also be locked in place, thus becoming non-rotating, by rotating the jack to lift the metal bolt in the attachment plate of the wheels into an opening made for it. The degree of movement of the jack is shown in Figure 4b by a two-headed arrow. The movement is about 80 mm, though usually movement of 10 - 20 mm is required. Thanks to the greater degree of movement, the furniture mover is suitable for fittings with different dimensions. In practice, the shoe components are at different heights from the floor in different embodiments. However, when moving one type of fitting the jack need be moved only a little, only enough for the furniture mover to be able to be attached to the fitting and the fitting to be raised off the floor.

The furniture mover is also shaped in such a way that it fits as such into the shoe component of the fitting, so that even the bottom shelf of the fitting or the products on sale need not be removed (Figure 1c). In other words, the support structure is the outer structure. In this way the jack is brought as closely as possible to the fitting, the external structure extending under the fitting. In the fittings there can be a kick-plate attached to the shoe components, which is detached in order to allow the furniture mover to be attached. However, even the bottom shelf can remain in place.

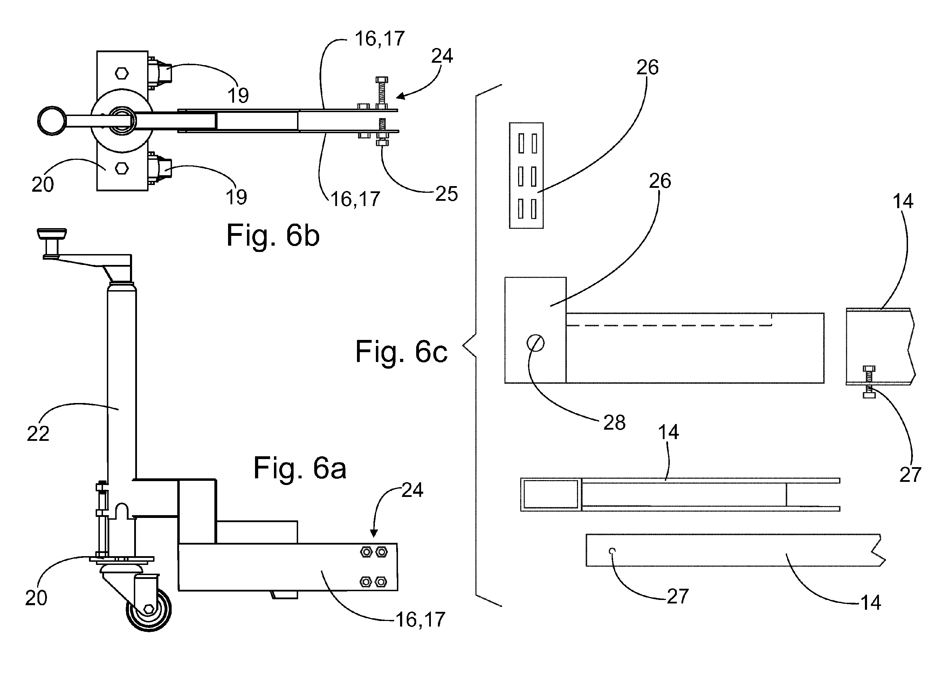

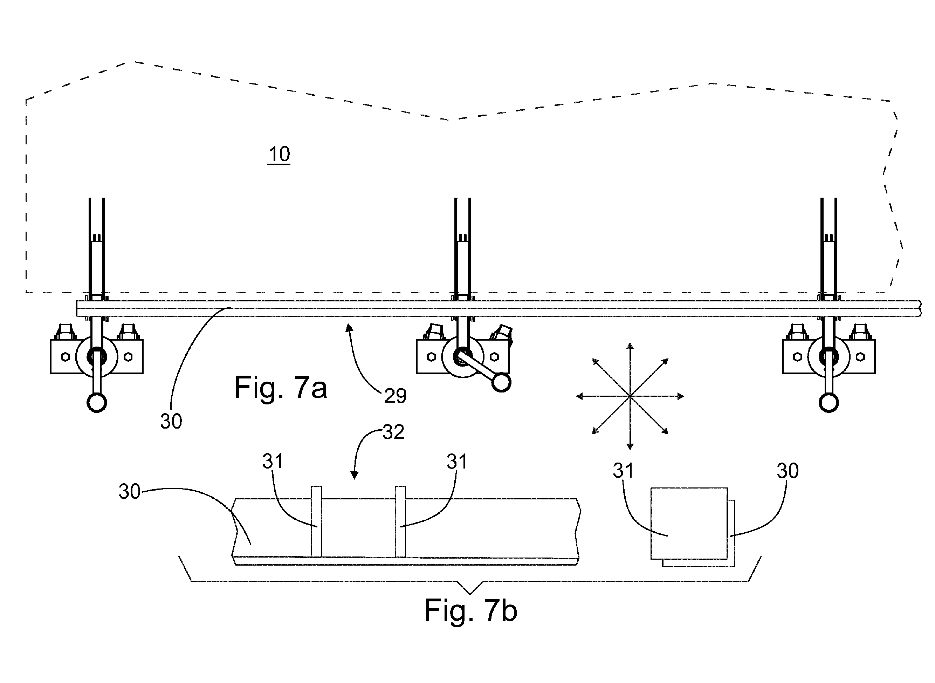

Figures 6a and 6b show a variation of the furniture mover according to the invention. In this case too, the supports 16 are plate components 17, but they are longer and thicker than in the first embodiment. In addition, the safety catch 23 is a pair of nuts 24 on both sides, to which a bolt 25 can be fitted. By means of the bolts, the furniture mover can be attached firmly and securely to the fitting. Only holes, into which a bolt can be set, can be used in place of the nuts. The location and number of the holes can vary. However, the basic part of the furniture mover fits into all the most common fitting models. It is easy to attach the furniture mover to the shoe component of the fitting with the aid of the hooks in the furniture mover. The attachment is ensured, for example by a bolt, which locks the shoe of the fitting while the weight of the attachment is distributed to the furniture mover. Of course, using, for example two bolts, the furniture mover can be supported on the shoe component so well that the hooks can be omitted. After attachment, the fitting is ready to be raised by turning the crank of the jack. The low model of the furniture mover permits a fitting, such as a shelving, to be moved without removing the bottom shelf. In addition, the crank used in lifting can be turned, without the fitting itself being in the way. With the aid of the furniture mover, it is also possible to raise one point at a time, as the fitting is only raised enough for the adjustable pad of the fitting's shoe to rise clear of the floor. Because the fitting can be raised only slightly at any one point, torsion and other strains in the fitting that may cause damage are avoided. Furniture movers are used at each shoe component, so that the weight of the fitting will be distributed between several points and the structure of the fitting will remain undamaged. Usually, furniture movers are used to rise one side of the fitting at the time, which also reduces the strain directed to the fitting. Then, the backboards and shelves of the fitting will remain securely in place. Because one shoe can be raised at a time, the fitting can be raised by one person, even though from two to four people should be available to move entire shelving gondolas. In the furniture mover, there are wheels that rotate fully, a kind of pivoting wheel, permitting a fitting to be moved lightly in any direction (Figure 7a). With the aid of furniture movers, parts of fittings too can be moved, making it possible to combine shorter fitting totalities to form long shelving gondolas as required.

By adding addition parts to the basic part of the furniture mover, it is also possible to move special fittings, such as garment fittings. This is shown in Figure 6c, which shows an additional part 26 seen from three directions. In this additional part there are several openings at different heights, so that the additional part can be attached to the hooks of the furniture mover at different points, more specifically at different heights. In practice, by using even two differently sized additional parts, the furniture mover will suit the most common garment fittings. The additional part 26 shown here is a length of profiled tubing, which is open at the bottom. Thus, the height-adjustment bolt 27 that is inside the garment-fitting shoe will not prevent the furniture mover from being pushed inside the shoe component 14 (Figure 7). In other words, the furniture mover, more specifically in this case the additional part 26, is fitted inside the shoe component 14. In addition, at the end of the additional part that is attached to the fitting shoe, there is a hole 28 for attachment, in which a bolt, for example, can be set. In practice, the additional part is designed to be of such a length that, in terms of its model, it will fit into the shoe of a garment fitting even when the bottom shelf is in place. In this way, unnecessary changes in the fitting itself are avoided. In practice, the additional part that was tested was about 400-mm long, 60-mm high, and 25-mm wide. A second version was otherwise nearly identical, but the height was 45 mm. Due to the single bolt, the additional part can be easily and quickly attached to the actual furniture mover and then the combination attached to the fitting shoe. The bolt also ensures the safe operation of the additional part. The additional part is attached to the hooks in the attachment part of the furniture mover and the attachment point of the additional part and the furniture mover is ensured by the aforementioned bolt. The furniture mover equipped with the additional part is attached to the shoe of the fitting by pushing it into the profile tube, so that, when the fitting is raised, the furniture mover is automatically locked inside the shoe.

When moving fittings, a sufficient number of furniture movers are selected for there to be one furniture mover to each shoe at both ends. The entire fitting is then loaded evenly and the load is directed to the correct point, i.e. to the shoes. When using furniture movers to move large shelving gondolas there is a danger that gaps in the floor or moving with individual furniture movers may lead to individual feet moving in different directions. There is then a danger of, for example, the furniture movers and especially the fitting feet buckling. In the invention, a rigid intermediate structure 29 is used as an aid to reinforce the furniture movers, thus avoiding unnecessary buckling. The intermediate structure is located on top of the support irons of the furniture movers, thus ensuring that all the movers move in the same direction at the same time. This permits shelving gondolas to be moved with only a few people.

In Figure 7a, the stiffening intermediate structure 29 is an angle iron 30, to which pieces of plate iron fitting the furniture mover are welded, located according to the use interval of the furniture movers. Adjustable pieces can be used in place of, or along with the fixed pieces. The furniture movers can then be placed more freely at different intervals. The pieces of plate iron attach to both sides of the furniture mover and lock in place. The angle iron is easy to set in place and is removed simply by lifting it. The angle iron, or more generally the intermediate structure, also facilitates positioning a shelving gondola precisely in place, as the location need not be measured separately at each shoe.

In the method according to the invention, several furniture movers are used simultaneously in a new and surprising manner. Fittings can be moved without dismantling them and the products can even be on the shelves during moving. Even shelving gondolas full of crockery have been moved successfully. As all the feet are equipped with furniture movers, the weight is distributed over several pairs of wheels. In addition, the furniture movers attached to a fitting parallel to each other support each other by means of the intermediate structure. This avoids the mutual movement of structure and detrimental deformations. An attachment counter-piece 32 according to the furniture mover is preferably arranged in the intermediate structure, in order to create shape locking. The intermediate piece will then remain in place due to the shape locking and partly also to gravity.

## Claims

1. Furniture mover, which is intended for moving a fitting (10) formed from fitting elements (11), **characterized in that** the furniture mover is arranged to be attached to a fitting element (11) without dismantling the fitting (10).

2. Furniture mover according to Claim 1, **characterized in that** the furniture mover includes quick-release attachment means (12) for attaching the furniture mover to the fitting element (11).

3. Furniture mover according to Claim 2, **characterized in that** the furniture mover includes a support structure (13), which is arranged to support the fitting element (11) in two different directions.

4. Furniture mover according to any of Claims 1 - 3, **characterized in that** the furniture mover is intended to be attached to a shoe component (14) belonging to the fitting (10).

5. Furniture mover according to Claim 4, **characterized in that** the quick-release attachment elements (12) are arranged according to the attachment arrangements (15) belonging to the shoe component (14) and the support structure (13) is formed of two supports (16), which are arranged at a distance from each other equal to the width of the shoe component (14).

6. Furniture mover according to Claim 4, **characterized in that** the furniture mover is fitted inside the shoe component (14).

7. Furniture mover according to any of Claims 1 - 6, **characterized in that** between the supports (16) there is a detachable safety catch (23) for locking the furniture mover to the fitting element (11).

8. Furniture mover according to any of Claims 1 - 7, **characterized in that** the furniture mover includes an adapter piece (SK) for attaching to different types of fitting.

9. Furniture mover according to any of Claims 1 - 8, **characterized in that** in the furniture mover there are two wheels (19) that rotate around themselves.

10. Furniture mover according to Claim 9, **characterized in that** the wheels (19) are attached to a rotatable base (20), which is attached to a jack (22) forming the body structure of the furniture mover.

11. Furniture mover according to any of Claims 5 - 10, **characterized in that** the support structure (13) is the outer structure.

12. Method for moving fittings, in which method a fitting (10) formed of fitting elements (11) is moved using a furniture mover, **characterized in that** the furniture mover is attached to a fitting element (11) without dismantling the fitting (10).

13. Method according to Claim 12, **characterized in that** in the method several furniture movers according to any of Claims 2 - 11 are used simultaneously.

14. Method according to Claim 12 or 13, **characterized in that** the furniture movers attached parallel to each other to the fitting (10) are supported on each by means of an intermediate structure (29).

15. Method according to any of Claims 12 - 14, **characterized in that** an attachment counterpiece (32) according to the furniture mover, for creating shape locking, is arranged in the intermediate structure (29).
